# EUROPEAN PATENT SPECIFICATION

(11) **EP 4 265 692 B1**
(45) Date of publication and mention of the grant of the patent: **29.10.2025**
(21) Application number: 21920897.2
(22) Date of filing: 22.12.2021
(51) Int. Cl.: C09D 11/30, C09D 5/14, C09D 11/322, C09D 11/38, C09D 11/326

(54) **BACTERICIDAL AND ANTIVIRAL DIGITAL INK**
BAKTERIZIDE UND ANTIVIRALE DIGITALE TINTE
ENCRE NUMÉRIQUE BACTÉRICIDE ET ANTIVIRALE

(30) Priority: 21.01.2021 ES 202130034
(43) Date of publication of application: 25.10.2023
(73) Proprietor: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2021/070916
(87) International publication number: WO 2022/157400

(56) References cited:
- WO-A1-2008/050625
- CN-A- 104 312 276
- KR-A- 20060 111 825
- KR-A- 20080 006 684
- KR-A- 20100 130 307
- US-A1- 2016 108 271
- US-A1- 2016 108 271

## Description

The present invention lies in the field of inkjet inks using drop-on-demand (DoD) technology which simultaneously provide bactericidal and antiviral action on a ceramic tile without altering the decoration or surface finish when subjected to a firing cycle at a maximum temperature between 950 °C and 1,300 °C.

### STATE OF THE ART

In the state of the art there are examples of ink compositions applied by means of inkjet technology with bactericidal and antiviral properties. Patent application US2018/0037750A1 describes an ink composition to be applied on supports that are not subjected to firing, such as paper, textiles, plastic, polymeric films, metal and wood. Said ink provides an antibacterial, antiviral, anti-fungal and/or biocidal effect and comprises water, optionally a cosolvent and an ionic nanoparticle formed by the combination of a polymer and a metal. The polymer is a resin selected from the group consisting of styrenes, acrylates, styrene butadiene, styrene methacrylates or combinations thereof. In turn, the nanoparticle is selected from the group consisting of silver, cobalt, nickel, gold, palladium or combinations thereof. Although this type of ink can be applied on textiles, it is not viable for ceramic tiles. The reason for this is that, since the particles are covered by entirely organic chains, in other words without the presence of Si, they do not provide any protection to the silver nanoparticles when they are deposited on a ceramic glaze and subjected to a firing cycle. During that firing cycle, the glaze is melted above 900 °C, thereby destroying the organic chains, while at the same time the components of said glaze attack the silver nanoparticles, causing them to dissolve or integrate into the molten glaze. Consequently, when the ceramic tile firing cycle is finished and the glaze solidifies, it has been observed that the silver nanoparticles are occluded within said glaze and do not provide a bactericidal or antiviral effect.

There are also bactericidal and antiviral inks in the state of the art intended to be applied on ceramic tiles that are subjected to a firing cycle. For example, patent EP3277634B1 describes a method for producing composite microparticles with a diameter between 0.1 micron and 0.5 microns, formed by TiO₂ on which Ag and/or Ag₂O-based nanoparticles are deposited. These composite microparticles have the feature of providing a photocatalytic and bactericidal effect even in the absence of visible light or with normal LED light (above a 400 nm wavelength). In this case, the TiO₂ particles have a diameter between 0.1 micron and 0.5 microns and are in the anatase allotrope form. Furthermore, the Ag and/or Ag₂O particles have a diameter between 1 nanometre and 20 nanometres and are attached to the surface of TiO₂ microparticles in a percentage between 3% and 12% with respect to the sum of the weights of the silver-based nanoparticles and the TiO₂ microparticles. The cited patent EP3277634B1 also protects a method of producing items treated with TiO₂ and Ag and/or Ag₂O composite microparticles, in particular on ceramic tile that is subjected to a firing cycle at a temperature between 400 °C and 780 °C. However, this patent has the limitation in that the maximum firing temperature is 780 °C, given that at higher temperatures, TiO₂ in the form of anatase is transformed into rutile, an allotropic form that does not provide a photocatalytic and bactericidal effect, either in the absence of visible light or with normal led light. This limitation in temperature prevents the deposition of these composite microparticles on most types of ceramic tiles intended for applications in flooring and wall tiles, in which firing temperatures are between 950 °C and 1,300 °C, and furthermore, in some applications, at higher temperatures. Moreover, It has been observed that the deposition of TiO₂ on ceramic surfaces in general, and on ceramic tiles in particular, causes undesirable iridescent effects, since they alter the final aesthetic and/or chromatic effect that is intended to be achieved in the ceramic tile. Thus, the ink composition object of the present invention lacks TiO₂ as a component.

Document WO 2008/050625 A1 might be cited as background prior art. Said document discloses a ceramic product including glaze, which was sprayed on the surface of the tile base material, dried and then heated to 1200°C. The glaze material before being fired included silver nanoparticles, a dispersant and a solvent. After the heat treatment the silver nanoparticles are found on the surface of the glaze, thereby the surface gains antibacterial and antiviral properties at level of activity over 99%. The document does not disclose any ink composition including silver nanoparticles functionalised with silane.

### DESCRIPTION OF THE INVENTION

Throughout the description and the claims, the word "comprises" and the variants thereof are not intended to exclude other technical features, additives, components or steps. Furthermore, the word "comprises" includes the case of "consists of". For those skilled in the art, other objects, advantages and features of the invention may be partially deduced from both the description and the embodiment of the invention.

The first object of the present invention is an ink composition applicable by means of drop-on-demand (DoD) inkjet technology of the type that, without altering the decoration or the surface of the ceramic tile glaze, simultaneously provides bactericidal and antiviral action when subjected to a firing cycle at a maximum temperature between 950 °C and 1,300 °C, and which comprises:
a. Silver nanoparticles functionalised with at least one silane, wherein the percentage by weight of the silver nanoparticles is between 0.4% and 2.5% of the total weight of the ink, and having a particle size (D90) of 300 nanometres.
b. Said at least one silane functionalising the silver nanoparticles in a percentage by weight comprised between 5% and 20% of the weight of the silver nanoparticles in the ink.
c. At least one dispersant in a percentage by weight between 1.5% and 5% of the total weight of the ink.
d. At least one solvent to complete the total weight of the ink.

Said ink composition according to the invention is free of TiO₂.

The term "functionalised silver nanoparticle", as it is used herein, refers to a nanometre-sized silver particle, characterised in that the surface thereof is coated with one or more molecules. As a result of the research, it has been discovered that when silver nanoparticles are functionalised with certain silane molecules, they develop a series of novel properties. First, they are capable of withstanding the glaze attack when it melts during the firing process. In this way, the silver nanoparticle remains stable, in other words it does not dissolve in the vitreous structure of the molten glaze. A second novel property is that, thanks to the silane chains, the silver nanoparticles have a synergistic action with dispersants, providing greater stability to the nanoparticles in the ink solvents, which prevents the sedimentation thereof. A third advantage is that once the functionalised silver nanoparticles according to the present invention have been deposited, they do not alter the final effect or decoration intended on the ceramic tile once fired. A fourth feature provided by the functionalisation of silver nanoparticles according to the present invention is that, depending on the mixture of silanes and the concentration thereof, said nanoparticles are more stable in polar or apolar solvents. This is a great advantage, since it allows for the development of ink compositions with adapted polarity properties based on the features required in each of the applications.

Specifically, it is envisaged in the present invention that the silane molecule is selected from the group that comprises tetraethoxysilane (TEOS), 3-aminopropyltriethoxysilane, 3-mercaptopropyltrimethoxysilane, 3-mercaptopropyltriethoxysilane, 3-glycidoxypropyltrimethoxysilane or a mixture thereof. The concentration of these silane molecules is also essential for the correct functioning of the ink. It has been observed that when the silane content with respect to the weight of the silver nanoparticle is less than 5%, the silver nanoparticles are attacked by the glaze during firing, losing the bactericidal and antiviral action thereof. In turn, when the silane content with respect to the weight of the silver nanoparticle is greater than 20 %, the silver nanoparticles are unstable and form a sediment, given that they sterically impede the anchoring of the dispersants.

According to the present invention, the silver nanoparticles have previously been synthesised by physical synthesis or chemical synthesis. In a particular embodiment of the present invention, the silver nanoparticles are obtained by a chemical synthesis that uses an organic or inorganic silver salt as a silver precursor. Examples of silver salts include, but are not limited to, silver acetate, silver nitrate, silver carbonate, silver phosphate, silver triflate, silver chloride, silver perchlorate and silver decanoate. In the state of the art, numerous methods of silver nanoparticle synthesis are described, starting from an organic or inorganic salt of silver. One of the most widespread methods consists of subjecting the silver salt to reduction with a reducer, such as hydrazine, ascorbic acid, oxalic acid, L-ascorbic acid, NaBH₄ o NH₃. In this way, the silver which is in a +1 oxidation state, is reduced to a zero oxidation state, in other words to metallic silver. An example of this procedure is found in J. Liu et al., Silver nanoparticles prepared by Chemical reduction-protection method, and their application in electrically conductive silver nanopaste (Journal of alloys and compounds, Vol. 494, 2010).

Likewise, according to the present invention, the synthesised silver nanoparticles are subjected to a functionalisation process consisting of anchoring the chains of at least one silane on the surface of the nanoparticles. The state of the art describes methods for functionalising particles with silanes that are based on mixing the particles or nanoparticles with the silanes by controlling the process parameters, such as the pH, among others. Examples are found in F. Avilés et al. Influence of silane concentration on the silanization of multiwall carbon nanotubes (Carbon 57, 2013, 520-529), and in M^{a}. A. Rodriguez et al. Reacción del aminopropiltrietoxisilano con particulas de pizarra (Boletin de la Sociedad Española de Cerámica y Vidrio (Journal of the Spanish Ceramic and Glass Society), 40, 2001, 101-107).

As previously mentioned, the dispersant content in the ink, according to the present invention, is between 1.5% and 5% of the total weight of the ink. Given that it is possible to modulate the stability in polar or apolar solvents of silver nanoparticles depending on the type and concentration of the silane molecules used in the functionalisation, the selection of the dispersant or mixture of dispersants will be done based on the desired final polarity of the ink. However, in some cases the dispersants are effective regardless of the polarity of the solvents. In this sense, according to the present invention, the dispersant is selected from the group comprising carboxylic acid derivatives, acrylic copolymers, polymeric fatty esters, polymeric esters, acid polyesters, polyamide salts, alkylammonium salts, polycarboxylic acids, polycarboxylic acid esters, polyamides, modified polyurethanes, phosphoric esters, polyacrylate salt, alkoxides, non-ionic modified fatty acid derivatives, Carboxylic acid salt, phosphoric polyether and polycarboxylic acid salt.

In the formulation of inks for DoD inkjet technology, a series of properties that determine the correct behaviour thereof is taken as a reference. In this sense, it is worth noting the value of the viscosity based on the shear rate or derived from the transverse deformation with respect to time, both when the ink is practically at rest (shear rate at 10 s⁻¹) and when it is in motion in the printing equipment circuit (shear rate comprised between 100 s⁻¹ and 1000 s⁻¹). The shear rate was measured with an Anton Paar model MCR102 cone-plate rheometer. The measurement method consists of placing the ink on a horizontal heated plate. Subsequently, the cone lowers and begins to rotate, measuring the torque. From the torque value, the viscosity value is calculated at a given temperature and shear rate. In this sense, the ink object of the present invention is characterised in that it has the following viscosity values at 40 °C based on the shear rate:
- Between 3 cP and 35 cP at 10 s⁻¹ shear rate.
- Between 6 cP and 20 cP at 100 s⁻¹ shear rate.
- Between 6 cP and 20 cP at 1000 s⁻¹ shear rate.

In the field of inkjet inks, the use of the centipoise unit (cP) is common, where 1 cP is equivalent to 0.001 Pa in the International System of Units.

Another property of ink in the field of DoD inkjets is surface tension, since it ensures that the drop exits the print head correctly and is deposited on the ceramic tile without expanding, which would cause a loss of definition of the printed motif. In this sense, the ink object of the invention is characterised in that it has a surface tension value comprised between 15 mN/m and 35 mN/m.

Another aspect of the present invention is that the ink composition comprises at least one solvent. Depending on the functionalisation of the silver nanoparticles according to the present invention, ink solvents are polar or apolar. In this sense, examples of polar solvents, according to the invention, include, but are not limited to, water, monoethylene glycol, monopropylene glycol, ethylene glycol propyl ether, 1,2,3-propanetriol, ethylene glycol n-butyl ether, diethylene glycol, diethylene glycol methyl ether, diethylene glycol ethyl ether, diethylene glycol n-butyl ether, triethylene glycol, triethylene glycol methyl ether, triethylene glycol ethyl ether, triethylene glycol n-butyl ether, tripropylene glycol methyl ether, polyethylene glycol, 2,3-butanediol, 1,5-pentanediol. In turn, examples of apolar solvents according to the invention include but are not limited to, aliphatic hydrocarbons, aromatic hydrocarbons, petroleum distillates and aliphatic esters.

Also envisaged in the present invention is the possibility that the composition of the bactericidal and antiviral ink contains at least one wetting agent in a percentage by weight between 0.05% and 2% of the weight of the ink, which is selected from the group comprising, a mixture of ethers with polyethylene-polypropylene glycol monobenzyl ether and C8-C10 alcohols, polyether-polysiloxane copolymer, nonionic surfactants, polyether-modified polydimethylsiloxane, fluorinated derivatives, alkoxylated alcohols, ethylene oxide and polyethylene copolymers and polyester-modified polydimethylsiloxanes or a mixture thereof.

A method of measuring bactericidal activity is the ISO 22196:2011 standard. This standard describes a method for evaluating antibacterial activity of non-porous surfaces, as is the case of fired ceramic tiles or glass. Thus, the standard establishes that antibacterial activity must be evaluated separately with two types of bacteria, Staphylococcus aureus and Escherichia coli. For each type of bacteria, it is required to apply a known number of bacteria on at least three pieces of the surface with the antibacterial component being evaluated, as well as on at least six pieces of a control surface without the antibacterial component, in order to be able to quantify the reduction of the bacterial load under the effect of the existing antibacterial component on the surface. After 24 hours of leaving the bacteria deposited on both the control surface and the antibacterial surface, under specific conditions of temperature and humidity, the bacteria present on the two types of surfaces is counted. From said count, the bactericidal activity is calculated, expressed as the percentage of elimination of bacteria on the surface with the antibacterial component with respect to the control surface. According to this standard, the bactericidal and antiviral ink object of the invention is characterised in that it has a bactericidal activity on the ceramic tile once fired equal to or greater than 99% both for Staphylococcus aureus and Escherichia coli bacteria, when the amount of ink deposited on the ceramic tile is equal to or greater than 20 g/m².

Moreover, antiviral activity is evaluated according to ISO 21702:2019. This standard describes a method for evaluating antiviral activity of non-porous surfaces, as is the case of fired ceramic tiles. Thus, the standard establishes that antiviral activity must be evaluated separately with at least two types of viruses, the Influenza A (H3N2) virus and the feline Calicivirus virus. For each type of virus, it is required to apply a known number of virus on at least three pieces of the surface with the antiviral component being evaluated, as well as on at least six pieces of a control surface without the antiviral component, in order to be able to quantify the reduction of the viral load under the effect of the existing antiviral component on the surface. After 24 hours of leaving the viruses deposited on both the control surface and the antiviral surface, under specific conditions of temperature and humidity, the viruses present on the two types of surfaces are counted. From said count, the antiviral activity is calculated, expressed as the percentage of elimination of virus on the antiviral surface with respect to the control surface. According to this standard, the bactericidal and antiviral ink object of the invention is characterised in that it has an antiviral activity on the ceramic tile once fired equal to or greater than 99% for both Influenza A (H3N2) virus and Feline calicivirus, when the amount of ink deposited on the ceramic tile is equal to or greater than 20 g/m².

Accordingly, a second object of the present invention is a ceramic tile printed with the bactericidal and antiviral ink according to the present invention and fired, according to claim 8.

| | | | | | |
|---|---|---|---|---|---|
| Petroleum distillate C16-C18 | Apolar solvent | | | 58.0 | 56.1 |
| Naphthenic distillate | Apolar solvent | | | 38.55 | 37.4 |
| Polyacrylate salt | Dispersant | 0.25 | 2.5 | | 1 |
| Non-ionic modified fatty acid derivative | Dispersant | | 2.5 | 2.5 | 2.25 |
| Phosphoric polyether | Dispersant | 1.25 | | | |
| Mixture of ethers with polyethylene-polypropylene glycol monobenzyl ether and C8-C10 alcohols | Wetting agent | | 1 | 0.05 | |
| Polyether-polysiloxane copolymer | Wetting agent | | 1 | | |
| Nonionic surfactant | Wetting agent | | | | 1.75 |

The properties in terms of viscosity and surface tension of each of the inks are indicated below.

**Table 3**

| Ink properties | 1 | 2 | 3 | 4 |
|---|---|---|---|---|
| Viscosity (40°C) at 10 s⁻¹ (CP) | 3 | 9.5 | 4.5 | 7.25 |
| Viscosity (40°C) at 100 s⁻¹ (CP) | 4.25 | 10.12 | 4.75 | 6.84 |
| Viscosity (40°C) at 1000 s⁻¹ (CP) | 7.25 | 16.5 | 9.25 | 14.25 |
| Surface tension (mN m) | 16 | 30 | 18 | 24 |

### Example 1. Application of the bactericidal and antiviral ink on porous single-fired ceramic tile with a transparent glossy effect.

Two ceramic tiles, CT1 and CT2, were prepared, both unglazed and glazed with a glaze that provides a transparent glossy effect when subjected to a porous single-firing cycle.

On the CT1 ceramic tile, five chromatic inks formulated in a polar medium were printed separately and by means of a DoD inkjet machine, allowing the colours cyan, brown, pink, yellow and black to be developed. In all colours, the application weight of each ink was 20 g/m².

On this CT2 ceramic tile, the same five chromatic inks formulated in a polar medium were printed separately and by means of a DoD inkjet machine, allowing the colours cyan, brown, pink, yellow and black to be developed. In all colours, the application weight of each ink was also 20 g/m². Then, on said ceramic tile with the five

| | Component | 1 | 2 | 3 | 4 |
|---|---|---|---|---|---|
| Petroleum distillate C16-C18 | Apolar solvent | | | 58.0 | 56.1 |
| Naphthenic distillate | Apolar solvent | | | 38.55 | 37.4 |
| Polyacrylate salt | Dispersant | 0.25 | 2.5 | | 1 |
| Non-ionic modified fatty acid derivative | Dispersant | | 2.5 | 2.5 | 2.25 |
| Phosphoric polyether | Dispersant | 1.25 | | | |
| Mixture of ethers with polyethylene-polypropylene glycol with monobenzyl ether and C8-C10 alcohols | Wetting agent | | 1 | 0.05 | |
| Polyether-polysiloxane copolymer | Wetting agent | | 1 | | |
| Nonionic surfactant | Wetting agent | | | | 1.75 |

The properties in terms of viscosity and surface tension of each of the inks are indicated below.

**Table 3**

| Ink properties | 1 | 2 | 3 | 4 |
|---|---|---|---|---|
| Viscosity (40°C) at 10 s⁻¹ (CP) | 3 | 9.5 | 4.5 | 7.25 |
| Viscosity (40°C) at 100 s⁻¹ (CP) | 4.25 | 10.12 | 4.75 | 6.84 |
| Viscosity (40°C) at 1000 s⁻¹ (CP) | 7.25 | 16.5 | 9.25 | 14.25 |
| Surface tension (mN m) | 16 | 30 | 18 | 24 |

### Example 1. Application of the bactericidal and antiviral ink on porous single-fired ceramic tile with a transparent glossy effect.

Two ceramic tiles, CT1 and CT2, were prepared, both unglazed and glazed with a glaze that provides a transparent glossy effect when subjected to a porous single-firing cycle.

On the CT1 ceramic tile, five chromatic inks formulated in a polar medium were printed separately and by means of a DoD inkjet machine, allowing the colours cyan, brown, pink, yellow and black to be developed. In all colours, the application weight of each ink was 20 g/m².

On this CT2 ceramic tile, the same five chromatic inks formulated in a polar medium were printed separately and by means of a DoD inkjet machine, allowing the colours cyan, brown, pink, yellow and black to be developed. In all colours, the application weight of each ink was also 20 g/m². Then, on said ceramic tile with the five deposited colours, the bactericidal and antiviral ink 1 according to the present invention was also printed by the same DoD inkjet machine. The ink 1 was deposited on the entire ceramic tile with a weight of 60 g/m².

Lastly, both ceramic tiles CT1 and CT2 were fired in a porous single-firing cycle, commonly used in the ceramic tile sector, with a maximum temperature of 1,120 °C.

Once fired, the ceramic tiles CT1 and CT2 were evaluated examining the colour rendering of each colour and gloss at 60° of the fired glaze. The following table shows the measurement of the chromatic parameters L, a* and b* in both ceramic tiles for each of the colours, as well as the gloss of the fired glaze in gloss units (GU). As can be seen, the application of the bactericidal and antiviral ink 1 according to the present invention does not alter the final chromatic effect or gloss of the ceramic tile.

**Table 4**

| | CT1 | | | CT2 | | |
|---|---|---|---|---|---|---|
| | L | a* | b* | L | a* | b* |
| Cyan | 52.9 | -9.15 | -15.25 | 52.75 | -9.35 | -15.05 |
| Brown | 39.58 | 18.23 | 16.9 | 39.20 | 18.12 | 16.25 |
| Pink | 53.43 | 31.02 | 7.59 | 53.08 | 31.12 | 7.30 |
| Yellow | 79.71 | 3.59 | 44.23 | 79.52 | 3.24 | 44.31 |
| Black | 29.85 | 1.52 | 2.63 | 29.95 | 1.78 | 2.45 |
| Gloss (60°) | 104 | | | 104 | | |

Likewise, on both ceramic tiles CT1 and CT2, the bactericidal property was evaluated, according to ISO 22196:2011 and the antiviral property was evaluated, according to ISO 21702:2019. The following table shows the results obtained. As can be seen, the application of ink 1 provides the surface of ceramic tile CT2 with bactericidal and antiviral activity equal to or greater than 99%.

**Table 5**

| | CT1 | CT2 |
|---|---|---|
| Bactericidal activity (ISO 22196:2011) | 5 % | 99.20 % |
| Antiviral activity (ISO 21702:2019) | 3 % | 99.10 % |

### Example 2. Application of the bactericidal and antiviral ink on porous single-fired ceramic tile with a transparent matte effect.

Two ceramic tiles, CT3 and CT4, were prepared, both unglazed and glazed with a glaze that provides a matte effect when subjected to a porous single-firing cycle.

On the CT3 ceramic tile, five chromatic inks formulated in an apolar medium were printed separately and by means of a DoD inkjet machine, allowing the colours cyan, brown, pink, yellow and black to be developed. In all colours, the application weight of each ink was 20 g/m².

On the CT4 ceramic tile, the same five chromatic inks formulated in an apolar medium were printed separately and by means of a DoD inkjet machine, allowing the colours cyan, brown, pink, yellow and black to be developed. In all colours, the application weight of each ink was also 20 g/m². Then, on said ceramic tile with the five deposited colours, the bactericidal and antiviral ink 3 according to the present invention was also printed by the same DoD inkjet machine. The ink 3 was deposited on the entire ceramic tile with a weight of 40 g/m².

Lastly, both ceramic tiles CT3 and CT4 were fired in a porous single-firing cycle, commonly used in the ceramic tile sector, with a maximum temperature of 1,140 °C.

Once fired, ceramic tiles CT3 and CT4 were evaluated examining the colour rendering of each colour. The following table shows the measurement of the chromatic parameters L, a* and b* in both ceramic tiles for each of the colours. As can be seen, the application of the bactericidal and antiviral ink 3 according to the present invention does not alter the final chromatic effect of the ceramic tile.

**Table 6**

| | CT3 | | | CT4 | | |
|---|---|---|---|---|---|---|
| | L | a* | b* | L | a* | b* |
| Cyan, | 50.01 | -9.85 | -16.7 | 50.21 | -9.25 | -16.8 |
| Brown | 40.21 | 19.4 | 19.91 | 40.26 | 19.37 | 20.02 |
| Pink | 56.11 | 30.19 | 8.89 | 56.51 | 30.58 | 8.94 |
| Yellow | 78.46 | 6.18 | 45.16 | 78.01 | 6.50 | 45.55 |
| Black | 27.81 | 0.79 | 1.59 | 27.23 | 0.65 | 1.45 |

Likewise, on both ceramic tiles CT3 and CT4, the bactericidal property was evaluated, according to ISO 22196:2011 and the antiviral property was evaluated, according to ISO 21702:2019. The following table shows the results obtained. As can be seen, the application of ink 3 provides the surface of ceramic tile CT4 with bactericidal and antiviral activity equal to or greater than 99%.

**Table 7**

| | CT3 | CT4 |
|---|---|---|
| Bactericidal activity (ISO 22196:2011) | 9 % | 99.50 % |
| Antiviral activity (ISO 21702:2019) | 7 % | 99.45 % |

### Example 3. Application of the bactericidal and antiviral ink on porcelain ceramic tile with a transparent glossy effect.

Two ceramic tiles, CT5 and CT6, were prepared, both unglazed and glazed with a glaze that provides a transparent glossy effect when subjected to a porcelain firing cycle.

On the CT5 ceramic tile, five chromatic inks formulated in an apolar medium were printed separately and by means of a DoD inkjet machine, allowing the colours cyan, brown, pink, yellow and black to be developed. In all colours, the application weight of each ink was 20 g/m².

On the CT6 ceramic tile, the same five chromatic inks formulated in an apolar medium were printed separately and by means of a DoD inkjet machine, allowing the colours cyan, brown, pink, yellow and black to be developed. In all colours, the application weight of each ink was also 20 g/m². Then, on said ceramic tile with the five deposited colours, the bactericidal and antiviral ink 4 according to the present invention was also printed by the same DoD inkjet machine. The ink 4 was deposited on the entire ceramic tile with a weight of 30 g/m².

Lastly, both ceramic tiles CT5 and CT6 were fired in a porcelain firing cycle, commonly used in the ceramic tile sector, with a maximum temperature of 1,200 °C.

Once fired, the ceramic tiles CT5 and CT6 were evaluated examining the colour rendering of each colour and gloss at 60° of the fired glaze. The following table shows the measurement of the chromatic parameters L, a* and b* in both ceramic tiles for each of the colours, as well as the gloss of the fired glaze in gloss units (GU). As can be seen, the application of the bactericidal and antiviral ink 4 according to the present invention does not alter the final chromatic effect or gloss of the ceramic tile.

**Table 8**

| | CT5 | | | CT6 | | |
|---|---|---|---|---|---|---|
| | L | a* | b* | L | a* | b* |
| Cyan | 51.41 | -4.12 | -14.05 | 50.95 | -4.25 | -14.85 |
| Brown | 41.44 | 18.31 | 17.07 | 41.05 | 18.20 | 17.15 |
| Pink | 51.95 | 31.25 | 8.06 | 51.80 | 31.20 | 8.10 |
| Yellow | 80.31 | -0.22 | 37.95 | 80.35 | -0.25 | 37.85 |
| Black | 27.82 | 0.89 | -0.4 | 27.85 | 0.92 | -0.35 |
| Gloss (60°) | 105 | | | 105 | | |

Likewise, the bactericidal property was evaluated on both tiles CT5 and CT6 according to ISO 22196:2011 and the antiviral property was evaluated, according to ISO 21702:2019. The following table shows the results obtained. As can be seen, the application of ink 4 provides the surface of ceramic tile CT6 with bactericidal and antiviral activity equal to or greater than 99%.

**Table 9**

| | CT5 | CT6 |
|---|---|---|
| Bactericidal activity (ISO 22196:2011) | 7 % | 99.75 % |
| Antiviral activity (ISO 21702:2019) | 5 % | 99.70 % |

### Example 4. Application of the bactericidal and antiviral ink on porcelain ceramic tile with a matte effect.

Two ceramic tiles, CT7 and CT8, were prepared, both unglazed and glazed with a glaze that provides a matte effect when subjected to a porcelain firing cycle.

On the CT7 ceramic tile, five chromatic inks formulated in a polar medium were printed separately and by means of a DoD inkjet machine, allowing the colours cyan, brown, pink, yellow and black to be developed. In all colours, the application weight of each ink was 20 g/m².

On the CT8 ceramic tile, the same five chromatic inks formulated in a polar medium were printed separately and by means of a DoD inkjet equipment, allowing the colours cyan, brown, pink, yellow and black to be developed. In all colours, the application weight of each ink was also 20 g/m². Then, on said ceramic tile with the five deposited colours, the bactericidal and antiviral ink 2 according to the present invention was also printed by the same DoD inkjet machine. The ink 2 was deposited on the entire ceramic tile with a weight of 20 g/m².

Lastly, both ceramic tiles CT7 and CT8 were fired in a porcelain firing cycle, commonly used in the ceramic tile sector, with a maximum temperature of 1,220 °C.

Once fired, ceramic tiles CT7 and CT8 were evaluated examining the colour rendering of each colour. The following table shows the measurement of the chromatic parameters L, a* and b* in both ceramic tiles for each of the colours. As can be seen, the application of the bactericidal and antiviral ink 2 according to the present invention does not alter the final chromatic effect of the ceramic tile.

**Table 10**

| | CT7 | | | CT8 | | |
|---|---|---|---|---|---|---|
| | L | a* | b* | L | a* | b* |
| Cyan | 50.4 | -7.1 | -20.47 | 50.35 | -7.15 | -20.35 |
| Brown | 42.7 | 19.6 | 19.2 | 42.50 | 19.45 | 19.38 |
| Pink | 84.97 | 2.66 | 2.81 | 85.02 | 2.25 | 2.95 |
| Yellow | 79.53 | 4.27 | 41.27 | 79.20 | 4.15 | 41.12 |
| Black | 29.45 | 0.21 | 1.65 | 29.50 | 0.25 | 1.72 |

Likewise, on both ceramic tiles CT7 and CT8, the bactericidal property was evaluated, according to ISO 22196:2011 and the antiviral property was evaluated, according to ISO 21702:2019. The following table shows the results obtained. As can be seen, the application of ink 2 provides the surface of ceramic tile CT8 with bactericidal and antiviral activity equal to or greater than 99%.

**Table 11**

| | CT7 | CT8 |
|---|---|---|
| Bactericidal activity (ISO 22196:2011) | 12 % | 99.99 % |
| Antiviral activity (ISO 21702:2019) | 10 % | 99.95 % |

### Example 5. Application of the bactericidal and antiviral ink on porous single-fired ceramic tile with a lustre ceramic effect.

Two ceramic tiles, CT9 and CT10, were prepared, both unglazed and glazed with a glaze that provides a glossy effect when subjected to a porous single-firing cycle.

An ink with a lustre ceramic effect formulated in a polar medium was printed on the CT9 ceramic tile using a DoD inkjet machine, allowing the lustre effect to be developed once fired. The application weight of the ink with the lustre ceramic effect was 100 g/m².

An ink with a lustre ceramic effect formulated in a polar medium was printed on the CT10 ceramic tile using a DoD inkjet machine, allowing the lustre effect to be developed once fired. The application weight of the ink with the lustre ceramic effect was also 100 g/m². Then, on said ceramic tile with the ink with the lustre ceramic effect deposited, the bactericidal and antiviral ink 2 according to the present invention was also printed by the same DoD inkjet machine. The ink 2 was deposited on the entire ceramic tile with a weight of 20 g/m².

Lastly, both ceramic tiles CT9 and CT10 were fired in a porous single-firing cycle, commonly used in the ceramic tile sector, with a maximum temperature of 1,120 °C.

Since the lustre ceramic effect is characterised by a high-gloss surface, once the ceramic tiles CT9 and CT10 were fired, they were evaluated examining gloss performance at 60°. The following table shows the measurement of gloss in both ceramic tiles in gloss units (GU). As can be seen, the application of the bactericidal and antiviral ink 2 according to the present invention does not alter the final lustre ceramic effect of the ceramic tile, since the final gloss does not change.

**Table 12**

| | CT9 | CT10 |
|---|---|---|
| Gloss (60°) | 149 | 149 |

Likewise, on both ceramic tiles CT9 and CT10, the bactericidal property was evaluated, according to ISO 22196:2011 and the antiviral property was evaluated, according to ISO 21702:2019. The following table shows the results obtained. As can be seen, the application of ink 2 provides the surface of ceramic tile CT10 with bactericidal and antiviral activity equal to or greater than 99%.

**Table 13**

| | CT9 | CT10 |
|---|---|---|
| Bactericidal activity (ISO 22196:2011) | 11 % | 99.97 % |
| Antiviral activity (ISO 21702:2019) | 8 % | 99.90 % |

## Claims

1. An ink composition applicable by means of drop-on-demand (DoD) inkjet technology of the type that simultaneously provides bactericidal and antiviral action when subjected to a firing cycle at a maximum temperature between 950 °C and 1,300 °C, and which comprises:
a. Silver nanoparticles functionalised with at least one silane, wherein the percentage by weight of the silver nanoparticles is between 0.4% and 2.5% of the total weight of the ink, and having a particle size (D90) of 300 nanometres,
b. Said at least one silane functionalising the silver nanoparticles in a percentage by weight comprised between 5% and 20% of the weight of the silver nanoparticles in the ink,
c. At least one dispersant in a percentage by weight between 1.5% and 5% of the total weight of the ink, and
d. At least one solvent to complete the total weight of the ink.

2. The ink composition according to claim 1, wherein the silane is selected from the group comprising tetraethoxysilane (TEOS), 3-aminopropyltriethoxysilane, 3-mercaptopropyltrimethoxysilane, 3-mercaptopropyltriethoxysilane, 3-glycidoxypropyltrimethoxysilane or a mixture thereof.

3. The ink composition according to any of the previous claims, wherein the silver nanoparticles are chemically synthesised by means of an organic or inorganic silver salt.

4. The ink composition according to any of the preceding claims, wherein the viscosity values at 40°C based on the shear rate are:
a. Between 3 cP and 35 cP at 10 s⁻¹ shear rate.
b. Between 6 cP and 20 cP at 100 s⁻¹ shear rate.
c. Between 6 cP and 20 cP at 1000 s⁻¹ shear rate.

5. The ink composition according to any of the preceding claims, wherein the surface tension value is comprised between 15 mN/m and 35 mN/m.

6. The ink composition according to claim 1, wherein the dispersant is selected from the group comprising derivatives of carboxylic acids, acrylic copolymers, polymeric fatty esters, polymeric esters, acid polyesters, polyamide salts, alkylammonium salts, polycarboxylic acids, polycarboxylic acid esters, polyamides, modified polyurethanes, phosphoric esters, polyacrylate salt, alkoxides, non-ionic modified fatty acid derivatives, Carboxylic acid salt, phosphoric polyether and polycarboxylic acid salt.

7. The ink composition according to any of the preceding claims, wherein the ink additionally comprises at least one wetting agent in a percentage by weight between 0.05% and 2% of the weight of the ink and is selected from the group comprising a mixture of ethers with polyethylene-polypropylene glycol monobenzyl ether and C8-C10 alcohols, polyether-polysiloxane copolymer, nonionic surfactants, polyether-modified polydimethylsiloxane, fluorinated derivatives, alkoxylated alcohols, ethylene oxide and polyethylene copolymers and polyester-modified polydimethylsiloxanes or a mixture thereof.

## Patentansprüche

1. Tintenzusammensetzung, die mittels Drop-on-Demand-Tintenstrahltechnologie (DoD) aufgebracht werden kann und die gleichzeitig eine bakterizide und antivirale Wirkung aufweist, wenn sie einem Brennzyklus bei einer maximalen Temperatur zwischen 950 °C und 1300 °C unterzogen wird, und die umfasst:
a. Silbernanopartikel, die mit mindestens einem Silan funktionalisiert sind, wobei der Gewichtsprozentsatz der Silbernanopartikel zwischen 0,4 % und 2,5 % des Gesamtgewichts der Tinte liegt und sie eine Partikelgröße (D90) von 300 Nanometern aufweisen,
b. mindestens ein Silan, das die Silbernanopartikel in einem Gewichtsprozentsatz zwischen 5 % und 20 % des Gewichts der Silbernanopartikel in der Tinte funktionalisiert,
c. mindestens ein Dispergiermittel in einem Gewichtsprozentsatz zwischen 1,5 % und 5 % des Gesamtgewichts der Tinte, und
d. mindestens ein Lösungsmittel zur Vervollständigung des Gesamtgewichts der Tinte.

2. Tintenzusammensetzung nach Anspruch 1, wobei das Silan ausgewählt ist aus der Gruppe, die Tetraethoxysilan (TEOS), 3-Aminopropyltriethoxysilan, 3-Mercaptopropyltrimethoxysilan, 3-Mercaptopropyltriethoxysilan, 3-Glycidoxypropyltrimethoxysilan oder ein Gemisch davon umfasst.

3. Tintenzusammensetzung nach einem der vorhergehenden Ansprüche, wobei die Silbernanopartikel chemisch mithilfe eines organischen oder anorganischen Silbersalzes synthetisiert werden.

4. Tintenzusammensetzung nach einem der vorhergehenden Ansprüche, wobei die Viskositätswerte bei 40 °C basierend auf der Schergeschwindigkeit wie folgt sind:
a. zwischen 3 mPa.s (cP) und 35 mPa.s (cP) bei 10 s⁻¹ Schergeschwindigkeit.
b. zwischen 6 mPa.s (cP) und 20 mPa.s (cP) bei 100 s⁻¹ Schergeschwindigkeit.
c. zwischen 6 mPa.s (cP) und 20 mPa.s (cP) bei 1.000 s⁻¹ Schergeschwindigkeit.

5. Tintenzusammensetzung nach einem der vorhergehenden Ansprüche, wobei der Oberflächenspannungswert zwischen 15 mN/m und 35 mN/m liegt.

6. Tintenzusammensetzung nach Anspruch 1, wobei das Dispergiermittel aus der Gruppe ausgewählt ist, die Derivate von Carbonsäuren, Acrylcopolymere, polymere Fettsäureester, polymere Ester, saure Polyester, Polyamidsalze, Alkylammoniumsalze, Polycarbonsäuren, Polycarbonsäureester, Polyamide, modifizierte Polyurethane, Phosphorsäureester, Polyacrylatsalz, Alkoxide, nichtionische modifizierte Fettsäurederivate, Carbonsäuresalz, Phosphorpolyether und Polycarbonsäuresalz umfasst.

7. Tintenzusammensetzung nach einem der vorhergehenden Ansprüche, wobei die Tinte zusätzlich mindestens ein Netzmittel in einem Gewichtsprozentsatz zwischen 0,05 % und 2 % des Gewichts der Tinte enthält und aus der Gruppe ausgewählt ist, die ein Gemisch von Ethern mit Polyethylen-Polypropylenglykolmonobenzylether und C8-C10-Alkoholen, Polyether-Polysiloxan-Copolymer, nichtionische Tenside, Polyethermodifiziertes Polydimethylsiloxan, fluorierte Derivate, alkoxylierte Alkohole, Ethylenoxid- und Polyethylen-Copolymere und Polyester-modifizierte Polydimethylsiloxane oder ein Gemisch davon umfasst.

## Revendications

1. Composition d'encre applicable au moyen d'une technologie jet d'encre goutte à la demande (DoD) du type qui fournit simultanément une action bactéricide et antivirale lorsqu'elle est soumise à un cycle de cuisson à une température maximale entre 950 °C et 1 300 °C, et qui comprend :
a. des nanoparticules d'argent fonctionnalisées avec au moins un silane, dans laquelle le pourcentage en poids des nanoparticules d'argent est entre 0,4 % et 2,5 % du poids total de l'encre, et ayant une taille des particules (D90) de 300 nanomètres,
b. Ledit au moins un silane fonctionnalisant les nanoparticules d'argent dans un pourcentage en poids compris entre 5 % et 20 % du poids des nanoparticules d'argent dans l'encre,
c. Au moins un dispersant dans un pourcentage en poids entre 1,5 % et 5 % du poids total de l'encre, et
d. Au moins un solvant pour compléter le poids total de l'encre.

2. Composition d'encre selon la revendication 1, dans laquelle le silane est choisi dans le groupe comprenant du tétraéthoxysilane (TEOS), 3-aminopropyltriéthoxysilane, 3-mercaptopropyltriméthoxysilane, 3-mercaptopropyltriethoxysilane, 3-glycidoxypropyltriméthoxysilane ou un mélange de ceux-ci.

3. Composition d'encre selon l'une quelconque des revendications précédentes, dans laquelle les nanoparticules d'argent sont synthétisées chimiquement au moyen d'un sel d'argent organique ou inorganique.

4. Composition d'encre selon l'une quelconque des revendications précédentes, dans laquelle les valeurs de viscosité à 40 °C sur la base du taux de cisaillement sont :
a. Entre 3 cP et 35 cP à 10 s⁻¹ taux de cisaillement.
b. Entre 6 cP et 20 cP à 100 s⁻¹ taux de cisaillement.
c. Entre 6 cP et 20 cP à 1000 s⁻¹ taux de cisaillement.

5. Composition d'encre selon l'une quelconque des revendications précédentes, dans laquelle la valeur de la tension de surface est comprise entre 15 mN/m et 35 mN/m.

6. Composition d'encre selon la revendication 1, dans laquelle le dispersant est choisi dans le groupe comprenant des dérivés d'acides carboxyliques, des copolymères acryliques, des esters gras polymères, des esters polymères, des polyesters acides, des sels de polyamide, des sels d'alkylammonium, des acides polycarboxyliques, des esters d'acide polycarboxylique, des polyamides, des polyuréthanes modifiés, des esters phosphoriques, un sel de polyacrylate, des alkoxydes, des dérivés d'acides gras modifiés non ioniques, un sel d'acide carboxylique, un polyéther phosphorique et un sel d'acide polycarboxylique.

7. Composition d'encre selon l'une quelconque des revendications précédentes, dans laquelle l'encre comprend en outre au moins un agent mouillant dans un pourcentage en poids entre 0,05 % et 2 % du poids de l'encre et est choisi dans le groupe comprenant un mélange d'éthers avec l'éther monobenzyle de polyéthylène-polypropylène glycol et des alcools C8 à C10, un copolymère polyéther-polysiloxane, des agents tensioactifs non ioniques, du polydiméthylsiloxane modifié par des polyéthers, des dérivés fluorés, des alcools alcoxylés, des copolymères d'oxyde d'éthylène et de polyéthylène et des polydiméthylsiloxanes modifiés par un polyester ou un mélange de ceux-ci.
